# EUROPEAN PATENT SPECIFICATION

(11) **EP 1 525 451 B1**
(45) Date of publication and mention of the grant of the patent: **15.07.2009**
(21) Application number: 03721261.0
(22) Date of filing: 29.04.2003
(51) Int. Cl.: G01N 21/07, B01L 3/00

(54) **METHOD OF ANALYSING A CATALYTIC SYSTEM USING AN INTEGRATED MICROFLUIDIC DEVICE**
VERFAHREN ZUR ANALYSE EINES KATALYTISCHEN SYSTEMS MITTELS EINER INTEGRIERTEN MIKROFLUIDISCHEN VORRICHTUNG
PROCEDE D'ANALYSE D'UN SYSTEME CATALYTIQUE UTILISANT UN DISPOSITIF MICROFLUIDIQUE INTEGRE

(30) Priority: 30.04.2002 SE 0201310; 30.04.2002 US 376776 P; 28.08.2002 WO PCT/SE02/01539; 28.08.2002 US 229676
(43) Date of publication of application: 27.04.2005
(73) Proprietor: GYROS PATENT AB, 751 83 Uppsala (SE)
(72) Inventor: HOLMQUIST, Mats, S-192 73 Sollentuna (SE); ENGSTRÖM, Johan, S-752 37 Uppsala (SE); PALM, Anders, S-187 37 Danderyd (SE); ANDERSSON, Per, S-753 29 Uppsala (SE); EKSTRAND, Gunnar, S-754 46 Uppsala (SE)
(74) Representative: Franks, Barry Gerard
(86) International application number: PCT/SE2003/000706
(87) International publication number: WO 2003/093802

(56) References cited:
- WO-A1-00/40750
- WO-A2-00/04390
- WO-A2-01/87487

## Description

### TECHNICAL FIELD

The present invention concerns miniaturized methods and microfluidic devices for use in highly integrated assays for the characterization of components of catalytic systems.

In microfluidic devices liquid aliquots containing a sample and/or other reactants are transported downstream along a microchannel structure or flow path while processing is taking place in specifically dedicated locations/substructures. The flow path typically passes two, three or more functional units as discussed below.

### BACKGROUND PUBLICATIONS

Anal. Chem. 73 (2001) 2648-2655 (Gao et al) describes a protease reactor that is linked via a silica capillary to an electrospray unit that has a microdialysis subunit. The reactor is confined within polydimethyl siloxane (PDMS) and contains a polyvinylidene fluoride membrane to which a protease is immobilized.

Anal. Chem. 72 (2000) 286-293 (Ekström et al) describes a silicon disc with 32 digestion channels having porous inner surfaces on which a protease is chemically bound. The digests are guided from the channels via PEEK tubing to a microdispenser for dispensation to a MALDI substrate plate.

Int. J. Mass. Spectrom. Ion Processes 169/170 (1997) 153-163 (Gobom et al) describes digestion of a protein sample in a microcolumn containing a protease that is immobilized to a perfusion chromatographic media. The digest is subsequently adsorbed and desalted by passage through a microcolumn containing a reverse phase chromatographic media (RPC-medium). The peptides in the RPC-eluate are characterized by MALDI MS.

Rapid Comun. Mass Spectrom. 14 (2000) 1377-1383 (Wang et al) describes a glass chip which comprises a relatively large protease digestion column integrated with a capillary electrophoresis channel and an electrospray ionization tip.

Anal. Chem. 74 (2001) 379-385 (Mao et al) describes enzyme systems that are immobilized inside a borosilicate glass tube or inside parallel microchannels of a PDMS substrate. For parallel channels there are common inlets and outlets. Detection of the products is via the walls of the tube/channels.

J. Am. Soc. Mass Spectrom. 8(5) (1997) 483-494 (Blackburn et al) describes the use of a capillary containing trypsin immobilized to macroporous beads for digestion of a protein and subsequent transport of the peptide fragments formed for analyses by nanoelectrospray ionization mass spectrometry.

Anal. Chem. 71 (1999) 4669-4678 (Duffy et al., "Microfabricated Centrifugal Microfluidic systems: Characterization and multiple Enzymatic Assays") and WO 0187487 (Tecan, Boston) describe performing a plurality of homogeneous enzyme reactions in a centrifugally based micro fluidic platform primarily intended for µl-volumes. This platform has been described in more detail in a number of patent applications and patents. See for instance WO 9721090 (Gamera Bioscience), WO 9807019 (Gamera Bioscience) WO 9853311 (Gamera Bioscience) etc

Recently, a potent centrifugally based platform has been made commercially available by Gyros AB. See for instance WO 9955827 (Gyros AB), WO 9958245 (Gyros AB), WO 0025921 (Gyros AB), WO 0040750 (Gyros AB), WO 0056808 (Gyros AB), WO 0062042 (Gyros AB), WO 0102737 (Gyros AB), WO 0146465 (Gyros AB), WO 0147637, (Gyros AB), WO 0154810 (Gyros AB), WO 0147638 (Gyros AB).

WO 00/04390 A discloses a microfluidic device comprising a plurality of essentially identical microchannel structures, wherein each of the microchannel structures comprises in the downstream direction an inlet arrangement with at least one inlet port, a microcavity comprising an immobilized biological moiety, and a detection zone. Furthermore, various methods of using this microfluidic device are described, e.g. for testing the specificity of a drug candidate by determining its interaction with a plurality of proteins separately immobilized in the microchannels, wherein said interaction may be catalytic conversion. The outcome of the catalytic reaction is detected within the microchannel using a fluorescence detection unit to which the microfluidic device is interfaced.

### OBJECTS OF THE INVENTION

The general object of the invention is to provide a method using a microfluidic device for performing in parallel a multitude of similar miniaturised catalytic assays with a high throughput and a high degree of integration with respect to the number of steps.
- A subobject is a method that allows catalytic assays of high accuracy, high sensitivity etc and high versatility with respect to speeding up the catalyst reactions while maintaining a high yield of the product formed.
- A further subobject is a method in which a plurality of catalytic assays can be carried out in parallel with low substrate concentrations, in particular ≤ 1 mM or even lower such as ≤ 500 nM or ≤ 100 nM in a minute time scale i.e. ≤ 60 minutes or ≤ 30 minutes or ≤ 10 minutes.
- A further subobject is a method for immobilization of a component of a catalytic system without adversely affecting the efficiency of the corresponding catalytic system, i.e. the efficiency should be essentially the same or better than the corresponding system in homogeneous form.
- A further subobject is a catalytic assay method that can be carried out at room temperature (= 25°C ± 5°C).
- A further subobject is to keep the interchannel variation with respect to differences in chemical and geometric/physical differences at a minimum in order to reduce differences in flow, in incubation times, etc. If these differences are not properly dealt with, there will be unacceptable interchannel variations in the results obtained both between and within the devices.

These subobjects in particular apply to the biocatalysts discussed below.

The challenges with speeding up catalytic reactions when going down in volumes can be illustrated with trypsin. Classically, in-solution tryptic digestion of a protein sample is performed at 37°C for up to 24 hours with a trypsin:substrate ratio of 1:20 to 1:100 in a volume of 100 µl at a concentration of 10 µM of the substrate. Improved yield of product peptides and increased reaction rate can be achieved by increasing the concentration of trypsin. However, this may lead to auto-catalytic digestion of trypsin meaning that trypsin will act as a competitive substrate thereby lowering the rate of digestion of the intended substrate. The rate of digestion varies greatly between different substrates, and also between the native and denatured states of a given substrate. To improve digestion efficiencies, a protein substrate is often denatured, its disulfide bridges cleaved and the generated free cysteins alkylated.

Complex protein mixtures are often fractionated by 2D-gel electrophoresis after which approximately 200 fmol and 10 pmol of protein can be visualised in the 2D-gel by classical silver- and Coomassie-staining methods, respectively. If these protein quantities are collected in 10 µl volumes, the sample concentrations will range from 0.02-1 µM. It is challenging to succeed with a fast and efficient digestion. Proteases (trypsin) have Kₘ values in the 5 µM range. At a substrate concentration equal to Kₘ, the digestion rate is only Vₘₐₓ /2. Furthermore, when a protein sample (0.02 µM) is digested in solution, only a small fraction (0.5%) of the proteases' maximum turn over rate can be reached. To increase the digestion rate one must either raise the substrate concentration or increase the proteinase:substrate ratio.

One approach to accomplish high proteinase load and avoid auto-catalytic digestion of the proteinase could be to perform the reaction within a microfluidic device with the proteinase immobilized to a solid support/phase within a microchannel structure. Alternatively, the protein substrate may be immobilized to the solid phase and subsequently equilibrated with a proteinase-containing eluent. In this latter methodology it will be possible to concentrate and at least to some degree promote denaturation of the protein substrate thereby making it more susceptible to proteolytic digestion. Sample treatment such as reduction and alkylation may be performed while the target protein is trapped on the solid phase.

The need for an extremely low inter-channel variation in chemical and/or geometric/ physical surface characteristics is stringent when going down in volumes. A small irregularity, for instance, in a surface of an inner wall of a microchannel may prevent passage of a liquid while passage easily occurs in a larger channel. It becomes utterly important to secure a high hydrophilicity with a low intra-channel variation inside the microchannels, which typically makes untreated plastic material unsuitable. At the same time an increase in hydrophilicity will also promote capillary creep inside the microchannels, which will promote evaporation and other losses from liquid aliquots that are to be used in well-defined volumes. By going down in volumes the volumes/surface ratio will favour a high relative nonspecific adsorption that increase the risk for killing the activity of soluble components of catalytic systems. See for instance WO 0147637 (Gyros AB), WO 0230571 (Sudor), and PCT/SE03/00560 (Gyros AB).

### DRAWINGS

**Figures 1a****-b** illustrate a suitable microfluidic device in the form of a disc in CD-format.
**Figure 2** outlines the microchannel structure that has been used in the experimental part. The structure can be placed on a disc in a similar manner as shown in figures 1a-b.

### THE INVENTION

The invention is a method for the characterization of an uncharacterized aspect of the components An₁, An₂ ....Anₙ (analytes) of a plurality (n) of equal or different catalytic systems CS₁, CS₂ .... CSₙ, respectively. Each of the catalytic systems comprises the components C¹ₖ, C²ₖ .... C^{m}ₖ, one of which is Anₖ.

n represents the parallelity, i.e. the number catalytic assays that are performed in parallel and is typically ≥ 2, such as ≥10 or ≥ 50 or ≥ 100 ≥ 200 or ≥ 400.

k is an index referring to a particular catalytic system or assay (CSₖ) and therefore goes from 1 to n in the innovative method. Each catalytic system is used in a separate microchannel structur, which means that k also is an index referring to the microchannel structure in which catalytic system CSₖ is used.

m is ≤ 2 and is the number of components of each of the catalytic systems utilized in the method.

The innovative method is characterized in comprising the steps of:
i) providing a microfluidic device which comprises at least n, preferably more than n, essentially identical microchannel structures where n is an integer ≥ 2 and each of the microchannel structures comprises in the downstream direction
   (a) an inlet arrangement IAₖ with at least one inlet port;
   (b) a catalytic microcavity MC1ₖ, which comprises an immobilized component C^{im} of catalytic system CSₖ, and
   (c) a detection zone (DZₖ);
ii) distributing the remaining components of each of CS₁, CS₂.... CSₙ to MC1₁, MC1₂ ... MC1ₙ, respectively, by
   a) dispensing C1¹, C₁² ... C₁^{m} except for C₁^{im} to IA₁; C₂¹, C₂² ... C₂^{m} except for C₂^{im} to IA₂; ... Cₙ¹, Cₙ² ... Cₙ^{m} except for Cₙ^{im} to IAₙ; and
   b) transporting the dispensed components of CS₁ to MC1₁; CS₂ to MC1₂; ... CSₙ to MC1ₙ;
iii) incubating the components of each catalytic systems in respective MC1₁, MC1₂ ... MCₙ;
iv) transporting the products formed in step (iii) from MC1₁, MC1₂ ... MCₙ downstream to DZ₁, DZ₂ ... DZₙ, respectively, wherein DZ does not coincide with the corresponding MC1;
v) measuring and characterizing the result of the reaction of each catalytic system CS₁, CS₂.... CSₙ in DZ₁, DZ₂ ... DZₙ, respectively; and
vi) characterizing for each microchannel structure the uncharacterized aspect of An₁, An₂ ....Anₙ from the results of step (v).
Each of one or more of the steps (ii.b)-(iv) is carried out in parallel with respect to the n microchannel structures. In preferred variants this applies to all steps (ii.b)-(iv). That step (ii.b) is carried out in parallel primarily means that the components of the catalytic systems are transported in such a way that the incubation in step (iii) can start simultaneously in MC1₁, MC1₂ ... MCₙ. Thus parallelity for step (iib) includes that one or more components are dispensed to the proper inlet ports of the microchannel structures and then transported into the structures, whereafter one or more of the remaining components are dispensed and transported into the structure etc. Also included is that mixing may take place within the device so that mixed aliquots are finally entering MC1_{1,} MC1₂ ... MC1ₙ in parallel.

An immobilized component C^{im}ₖ may comprise one, two or more different molecular entities.

### Catalytic systems, aspects to be characterized and samples

Catalytic systems (CS) primarily contemplate biocatalytic systems, for instance enzyme systems that are based on active proteins or synthetic variants thereof. Specifically designed may be used as synthetic variants, for instance. Components of a catalytic system can be illustrated with catalysts, substrates, cosubstrates, cofactors, cocatalysts, inhibitors, promoters, activators etc. For enzyme systems this corresponds to enzymes, substrate, cosubstrates, coenzymes, cofactors etc. The number (m) of components in a catalytic system varies between different systems and may also vary depending on what is to be characterized in the innovative method. The integer m is at least 2 but may also be 3, 4, 5, 6 etc. In most cases it is below 10, such as below 6.

Enzyme systems may be selected amongst: 1) Oxidoreductases (dehydrogenases, oxidases etc), 2) Transferases, 3) Hydrolases (esterases, carbohydrases, proteases etc), 4) Lyases, 5) Isomerases, and 7) Ligases.

A component of catalytic system may be native or may have been produced synthetically or recombinantly. The component may exhibit amino acid structure, peptide structure, such as oligo- or polypeptide structure, nucleotide structure, such as oligo- or polynucleotide structure, carbohydrate structure such as oligo- or polypeptide structure, lipid structure, steroid structure, hormone structure etc. Synthetic compounds, for instance deriving from combinatorial libraries, potentially mimicking native variants of components of catalytic systems are included.

The aspect to be characterized comprises at least one of a) an amount of a component of a catalytic system, b) conditions for catalysis, c) new components for one or more particular catalytic systems, d) structural information about the components, etc. The term "amount" includes absolute amounts, relative amounts, concentrations, activity etc. Structural information in particular includes information about the substrate, interacting sites in components etc.

The samples used in the individual microchannel structures are typically in liquid form and aqueous, and contain the component Anₖ for which a feature is to be characterized. Anₖ may be provided as an immobilized component C^{im}ₖ as defined above during or prior to step (i) or as a soluble component Cₖ in step (ii).

For biocatalysts the samples are typically derived from biological material such as whole blood, plasma, serum, buffy coat, blood cells, semen, cerebrospinal fluid, lymph, lachrymal fluid, ascites, tissue, supernatants from cell lysates, cell culturing et. Included are also other liquids that contain components, in particular related to biocatalytic systems.

### LIQUID TRANSPORT (STEPS iii AND v)

The transport of reactants within the individual microchannel structures is by liquid flow that may be driven by distinct means that either is present in or external to the device. Thus, liquid flow may be created by electroosmosis, micropumps, expanding gas etc. Another alternative is to use forces such as capillary force and/or inertia force including centrifugal force to drive the liquid, i.e. forces which do not require any means on the microfluidic device.

Centrifugal force typically requires spinning speeds within the interval 50-25000 rpm, such as 50-15000 rpm. The spinning speed within a given protocol may vary, for instance comprise sequences with individual ramps of acceleration, deceleration, and constant spinning. It may be beneficial to include a pulse of increased spinning at certain positions. See the experimental part.

In centrifugal based systems a "higher" or an "upper" level/position will be at a shorter radial distance (inner position) from the spinning axis compared to a "lower" level/position (outer position). Similarly, the terms "up", "upward", "inwards", and "down", "downwards", "outwards" etc will mean towards and from, respectively, the spinning axis. For other arrangements/substrates and conventional driving forces, these terms have their conventional meaning.

The reactions that take place in the microfluidic device, for instance the catalytic reaction in the catalytic microcavities MC1, may take place under non-flow conditions or flow conditions. Non-flow conditions are at the priority date preferred for the catalytic microcavities. For adsorption and desorption reactions that may be utilized in other microcavities (see below) flow conditions are often preferred as described in WO 02075312 (Gyros AB). In the case flow conditions are utilized it often will be important to properly control the flow to become essentially the same in the microchannel structures that are used in parallel in a device. One of the key concept for accomplishing essentially the same flow conditions is to place the flow in the individual microchannel structures under common flow control as described in WO 02075312 (Gyros AB) and WO 03024598 (Gyros AB) with centrifugal force as the driving force being preferred.

### DISPENSATION (STEP ii PARTLY)

External dispensing means for µl-volumes and smaller volumes typically utilizes syringe pumps, ink-jet type dispensers, pins or needles. A suitable ink-jet type dispenser of the flow-through type is described in US 6,192,768 (Gyros AB). See also PCT/SE02/01888 (Gyros AB). Systems utilizing pins and needles are described in US 5,957,167 (Pharmacopea) and WO 0119518 (Aclara).

### INCUBATIONS (STEP III)

This step takes place in MC1. Incubations are typically performed during periods of times that are within the interval of 1 second up to 10 hours but may also be for days and weeks, for instance up to 10 weeks. Typically the incubations are at room temperature but also other temperatures may be used including also temperature cycling. An attractive way for heating utilizes patterned heating areas as described in WO 0241997 (Gyros AB) and WO 0241998 (Gyros AB). Heating may be created in the patterned areas, for instance, by absorption of irradiation, such as light, by electricity etc

The liquids in which incubations are taking place are typically aqueous, in particular for enzyme systems. For proteolytic systems it many times will be of advantage to include a water-miscible organic solvent that denature the substrate but leave the enzyme essentially in a native state. Potentially useful organic solvents are acetonitril, methanol, ethanol, isopropanol, N,N-dimetylformanide etc for which appropriate concentrations of organic solvents are found within the interval 0-80% (v/v). The upper limit is determined for each individual case by the enzyme at issue, the material in the inner walls of the microfluidic device etc. Similar advantages are likely to be at hand also for other structure breaking/denaturing agents, for instance hydrogen bond breaking agents, that preferentially denature the substrate compared to the enzyme used. Candidate agents can be found in textbooks.

For devices that utilize spinning, incubation may be performed while spinning the disc provided the conduits connected to the microcavity in which incubation is taking place is provided with appropriate valving functions, e.g. in microconduits that are connected to the lower part of a reaction microcavity, e.g. MC1. For smaller volumes, i.e. within the nl range in particular, and longer incubation periods it may be appropriate to have anti-wicking means in these microconduits as well, in particular if incubations are for periods > 1 minute. See for instance WO 03018198 (Gyros AB).

### MICROFLUIDIC DEVICE (STEP i)

The microfluidic devices may be of different geometric form. Our preferred devices have an p-numbered axis (Cₚ) of symmetry, where p is an integer between 2 and ∞, preferably 6, 7, 8 and larger, for instance ∞, and/or are in the form of discs. Devices in the form of discs typically include sizes and/or forms similar to the conventional CD-format, i.e. sizes that are in the same range as that of circular discs with radii in the interval from 10% up to 300 % of the conventional CD-radius. Disc-shapes other than circular are also possible, for instance rectangular forms such as squares, and oval forms, nudel-shaped forms etc. For discs the axis of symmetry referred to is typically perpendicular to the plane of the disc. Devices with a circular, cylindrical, spherical, conical etc symmetry are examples of devices with a C_{∞}-numbered axis of symmetry.

A prerequisite for utilizing centrifugal force for driving a liquid flow within a device is that at least a part of each microchannel structure should have an upstream portion that is closer to the spin axis than a downstream portion. Applied to the preferred format at the priority date, this means a device in the form of a disc with the above-mentioned axis of symmetry coinciding with the spin axis and being perpendicular to the plane of the disc. The above-mentioned axis of symmetry and the spin axis may or may not coincide.

The microfluidic device comprises at least the same number (n) of essentially identical microchannel structures as the number (n) of enzyme assay protocols to be performed in parallel in the device. Any additional microchannel structures may be essentially identical or non-identical to these structures.

The total number of microchannel structures on a device is typically ≥ 2, such as ≥10 or ≥ 50 or ≥ 100 ≥ 200 or ≥ 400. The upper limit may be ≤ 15000, such as ≤ 10000 or ≤ 5000 or ≤ 975.

Excess microchannel structures may be used for reference/standard samples in which the uncharacterized aspect of an analyte (An) is known prior to being introduced into the device. A typically example is a reference sample which contains a known amount of the analyte and which is introduced into and processed within an excess microchannel structure essentially according to steps (i)-(v). Excess microchannel structures may also be redundant microchannel structures that for various reasons have been withdrawn from use by the manufacture. See for instance PCT/SE03/00448 (Gyros AB). Another use of excess microchannel structures is to carry out certain of the enzyme assays in a mode that is not parallel to those that are performed in parallel.

A microchannel structure used in the context of the invention is a flow path, which comprises at least
a) an inlet arrangement IA with at least one inlet port,
b) a catalytic microcavity MC1, which comprises an immobilized component C^{im} of a catalytic system CS having n components (C₁, C₂ ....Cₙ), one of which is C^{im}, and
c) a detection zone (DZ).
As discussed above C^{im} in a MC1 of a microchannel structure may comprise one or more different molecular entity or components of the catalytic system.

The term "micro" refers to size and contemplates that a microchannel structure comprises one or more cavities and/or channels that have a depth and/or a width that is ≤ 10³ µm, preferably ≤ 10² µm. The volumes of micro cavities/microchambers are typically ≤ 5000 nl (= nl-range), such as ≤ 1000 nl or ≤ 1000 nl or ≤ 500 nl or ≤ 100 nl or ≤ 50 nl, but may also be larger, i.e. in the interval 1-1000 µl, such as 1-100 µl or 1-10 µl. The term "cavity" includes a segment of a channel without a change in cross-sectional dimension, a chamber-like structure in which there is an increase in cross-sectional dimension at the entrance and/or exit of the chamber, a constricted segment of a channel segment etc.

Different applications require different surface characteristics of the microchannels in the device. This means that hydrophilization may be required for microchannels in which aqueous liquids are to be transported. See for instance WO 0056808 (Gyros AB) and WO 0147637 (Gyros AB). For aqueous liquids an essential part of the inner surfaces should have water contact angles ≤ 90°, such as ≤ 40° or ≤ 30° or ≤ 20° at the temperature of use, i.e. be hydrophilic/wettable. This in particular applies to inlet arrangements and transport microchannels and microchannels in which capillary forces are used for transporting aqueous liquids. At least two or three of the inner walls enclosing the channels should comply with this range. Surfaces in passive valves, anti-wicking means, functionalized surfaces comprising for instance a component, etc may be excluded from these general rules. See below.

Non-wettable (hydrophobic) surface breaks may be introduced at predetermined positions in the hydrophilic inner walls of the microchannel structures open form before enclosing them for instance by a lid (WO 9958245, Gyros AB) and WO 0185602, Åmic AB & Gyros AB). Surface breaks may be used for controlling the liquid flow within the structures, e.g. anti-wicking means, passive valves, other means for directing liquids etc. See below.

The microfluidic devices may be made from inorganic or organic material. Typical inorganic materials are silicon, quartz, glass etc. Typical organic materials are polymer materials, for instance plastics including elastomers, such as rubber silicone polymers (for instance poly dimethyl siloxane) etc. Polymer material as well as plastics comprises polymers obtained by condensation polymerisation, polymerisation of unsaturated organic compounds or other polymerisation reactions. The microstructures in open form may be created by various techniques such as etching, laser ablation, lithography, replication by embossing, moulding, casting etc, etc. Each substrate material typically has its preferred techniques.

From the manufacturing point of view, substrates exposing surfaces and microstructures in plastics are many times preferred because the costs for plastics are normally low and mass production can easily be done, for instance by replication. Typical manufacturing processes involving replication are embossing, moulding, casting etc. See for instance WO 9116966 (Pharmacia Biotech AB, Öhman & Ekström). Preferred plastics are polycarbonates and polyolefins based on polymerisable monomeric olefins that comprise straight, branched and/or cyclic non-aromatic structures. Typical examples are Zeonex^{™} and Zeonor^{™} from Nippon Zeon, Japan. This does not outrule the use of other plastics, for instance based on styrenes, methacrylates and/or the like.

The plastic material may be black, for instance containing graphite powder or carbon black, in particular if the detection principle utilized for the measurement in step (v) utilizes fluorescence, luminescence etc.

### Inlet arrangements with inlet ports

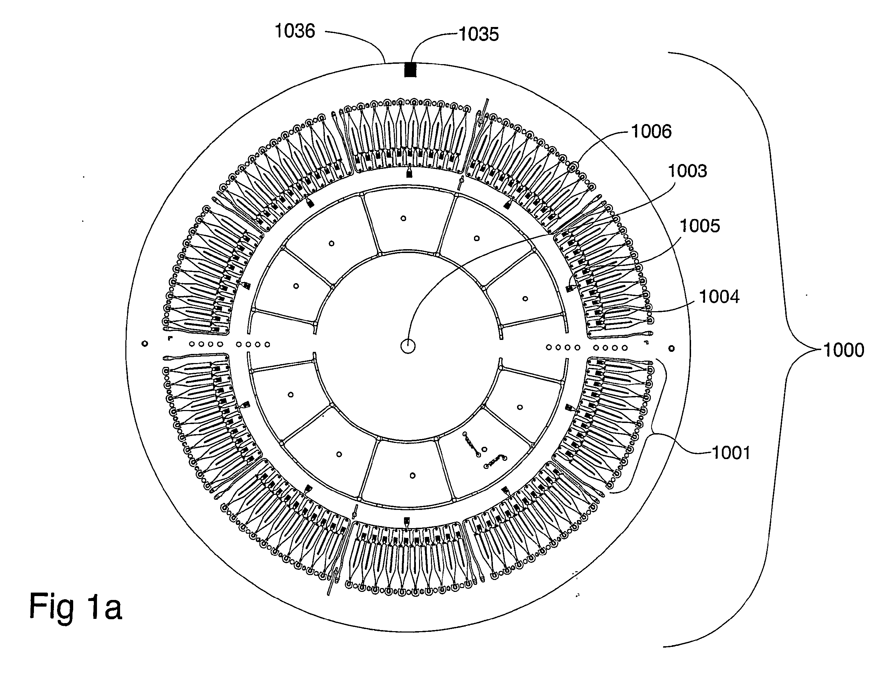

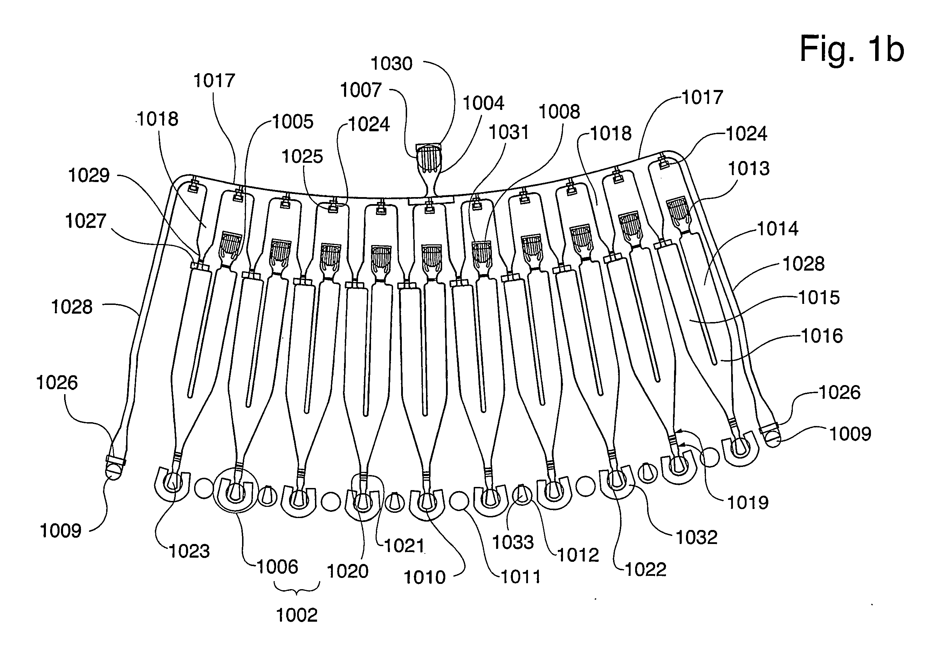

Suitable inlet arrangements are described in WO 02074438 (Gyros AB), WO 02075775 (Gyros AB), WO 9858245 (Gyros AB), WO 0187486 (Gamera) etc. See also figure 1a and b.

The inlet arrangement of a microchannel structure may comprise one part (part I) that is common for a subgroup of microchannel structures, and one or more additional parts (parts II, III ..), which each is individually linked to a microchannel structure. Part I is typically physically separated from the other parts of an inlet arrangement. Part I is used for simultaneously distributing liquid aliquots of the same compositions to microchannel structures of the same subgroup. Part I as given in figures 1a and b typically comprises
a) an inlet port (1004) which is associated with several microchannel structures (1002) or catalytic microcavities (MC1) (1016), and
b) a common distribution manifold (1017) which comprises one volume-defining unit (1018) per microchannel structure/catalytic microcavity (MC1).

In the extreme a common inlet port is communicating via a distribution manifold with all microchannel structures of a device. Each of the other part(s) of an inlet arrangement comprises an inlet po rt (1005) that is connected to only one microchannel structure/catalytic microcavity (MC1), typically via a volume-defining unit (not shown in figure 1). An inlet port of these other parts may be used for introducing liquid aliquots that may be different for different microchannel structures in the same subgroup. In a similar manner microchannel structures of a subgroup may be interconnected via a common outlet arrangement with a common outlet port, or each microchannel structure may have a separate outlet port or. A common outlet arrangement may comprise a common waste channel.

A structural unit that is common for several microchannel structures is considered to be a part of each of the individual microchannel structure for which it is common. This in particular applies to inlet and outlet arrangements.

Suitable singular volume defining units comprise
a) a volume metering microcavity,
b) an overflow microchannel,
c) an inlet microconduit for liquid, and
d) an outlet microconduit with a valve function in the lower part of the metering microcavity.
The overflow microchannel preferably has a valve at a lower level than the outlet of the volume-metering microcavity. For smaller volumes, for instance in the µl-range and in particular for the nl-range, there are preferably anti-wicking means in the inlet microconduit between the inlet port and its inlet to the volume-metering cavity, for instance immediately upstream its intersection with the overflow microchannel. Anti-wicking means may be in the form of a local change in chemical surface characteristics (hydrophobic surface breaks for aqueous liquids) and/or in geometric surface characteristics (primarily indentations). The volume-metering cavity typically has a larger cross-sectional area (dimension) than the inlet microconduit and the overflow microchannel. Suitable units of this kind and anti-wicking means are among others described in units 7, 11 and 12 of WO 02074438 (Gyros AB).

Volume defining units that are parts of a manifold for distributing aliquots in parallel to several microchannel structures/microcavities comprise typically a common distribution channel (1017) with consecutive volume-defining sections (1018) and an opening (1009) at each end of the channel Each of the sections defines a volume to be distributed and has an outlet opening in a lower part for transport of liquid further down into a microchannel structure. Each section may be designed as a microcavity, for instance as a downward bent. The inlet for liquid is typically at one of the ends of the common channel or in its middle part (1004,1007). Local inner surface breaks (chemical and/or geometric) (1024,1025) are preferably delineating each section. Vents for inlet of ambient atmosphere may surround the sections or be common with the liquid inlet (1007). See also WO 02074438 (Gyros AB (figure 4) and WO 02075775 (Gyros AB)(figures 7b), WO 9858245 (Gyros AB), WO 0187486 (Gamera) etc.

For centrifugally based systems, an inlet port is typically located at a shorter radial distance from the spinning axis than the catalytic microcavity (MC1). Downstream the catalytic microcavity there may be an outlet port which typically is located at a larger radial distance than the reaction microcavity. By utilizing capillary force and/or other non-centrifugal forces for the introduction of a liquid into a microchannel structure, inlet ports may be located at in principle any radial distance, e.g. even more remote from the spinning axis than an outlet port and/or the catalytic microcavity.

### Catalytic microcavity (MC1)

The geometric form and size of the catalytic microcavity (MC1) are as outlined above under the heading "Microfluidic Device".

The immobilized component C^{im} is typically the catalyst, for instance an enzyme, or the substrate, but may alternatively some other component of the catalytic system, such as cosubstrate, cofactor, cocatalysts etc. Immobilization is typically to a solid phase, which is retained within MC1.

The solid phase may be
a) the surface of the inner wall of MC1,
b) the inner surface of a porous monolith that wholly or partly occupies the interior of MC1,
c) a population of porous or non-porous particles that are packed to a bed within MC1.
Porous monoliths include porous plugs and membranes. In the case the solid phase comprises particles, there should be retaining means associated with the downstream end of MC1. Such means are preferably in the form of a constriction, e.g. in the form of a physical barrier, that prevents the particles from having MC1. The particle diameter/size should then be of essentially the same size as or larger than the largest opening at the constriction. Another kind of retaining means is an externally applied magnetic field combined with magnetic particles.

A porous monolith may be fabricated in one piece of material or may comprise particles that are attached to each other.

By the term "porous particles" is meant that the particles can be penetrated by soluble components of the catalytic system. This typically means Kav values within the interval of 0.4 -0.95 for the components. Non-porous particles typically have a Kav-value below 0.4 with respect to the same components. Porous monoliths have pores that are large enough to permit mass transport of soluble components of the catalytic systems through the matrix by the liquid flow applied.

The particles may be spherical or non-spherical. For non-spherical particles, diameters and sizes refer to the "hydrodynamic" diameter.

The particles may be monodisperse (monosized) by which is meant that the population of particles placed in MC1 has a size distribution with more than 95 % of the particles within the range of the mean particle size ± 5 %. Populations of particles that are outside this distribution range are polydisperse (polysized).

The material in the solid phase, e.g. the particles, is typically polymeric, for instance a synthetic polymer or a biopolymer. The term biopolymer includes semi-synthetic polymers that comprise a polymer chain derived from a native biopolymer. The particles and other forms of solid phases are typically hydrophilic in the case the liquid flow is aqueous. In this context hydrophilic encompasses that a porous solid phase, e.g. a packed bead, will be penetrated by water that is brought into contact with the bed. The term also indicates that the inner surfaces of the bed expose a plurality of polar functional groups in which there is a heteroatom selected amongst oxygen, sulphur, and nitrogen. Appropriate functional groups can be selected amongst hydroxy groups, eythylene oxide groups ([-CH₂CH₂O-]_{n'}, n' an integer > 1), amino groups, carboxy groups, sulphone groups etc, with preference for groups that are essentially neutral independent of pH (primarily pH 2-11). A hydrophobic solid phase may be hydrophilized.

The principles for immobilization of various components are well known in the field. The bonding of a component to the solid phase may, for instance, be via covalent bonds, affinity bonds (for instance biospecific affinity bonds), physical adsorption (mainly hydrophobic interaction) etc. Examples of biospecific affinity bonds are bonds between strepavidin and a biotinylated component, between a high affinity antibody and a haptenylated component etc. Immobilization to the inner walls of MC1 may be via minor particles, for instance with diameters in the nm-range or smaller, in order to increase the surface and thus also permitting higher load of the immobilized component and potentially also higher reaction rates. This kind of particles may for instance adhere to the walls by electrostatic forces, magnetic forces etc.

### Detection zone (DZ)

Subsequent to the incubation step the reaction mixture may be transported by a liquid flow to the detection zone (DZ) that provides an interface to external means that enables the measurement in step (v). No transport to DZ is required if DZ overlaps or coincides with MC1.

The detection zone typically comprises a retaining microcavity (MC2) and a detection microcavity (MC3) downstream MC2. MC2 may overlap or coincide with MC1, and MC3 may overlap or coincide with MC2. Both of these microcavities may have dimensions as discussed above for microcavities in general.

The retaining microcavity MC2 is capable of retaining selectively excess substrate, or products formed in MC1, or contaminants that will disturb the measurement in step (v). If contaminants are retained, the substrate and/or the product is transported further downstream into the detection microcavity (MC3). If the entity to be measured is retained in MC2 this microcavity can be designed as a detection microcavity meaning that MC2 and MC3 coincide and measurement is taking place in MC2. Alternatively the detection microcavity MC3 is located downstream MC2, which requires that the retained entity needs to be further processed in order to accomplish the measurement in MC3.

The retaining microcavity MC2 typically comprises a solid phase that exposes a group (ligand) that is capable of retaining a desired compound. Binding may be of two main kinds: affinity binding or covalent binding. Covalent binding is typically reversible, for instance by thiol-disulfide exchange. Affinity binding (= affinity adsorption) can be illustrated with:
(a) electrostatic interaction that typically requires that the ligand and the entity to be bound have opposite charges,
(b) hydrophobic interaction that typically requires that the ligand and the entity to be bound comprises hydrophobic groups,
(c) electron-donor acceptor interaction that typically requires that the ligand and the entity to be bound have an electron-acceptor and electron-donor group, respectively, or vice versa, and
(d) bioaffinity binding in which the interaction is of complex nature, typically involving a mixture of different kinds of interactions and/or groups.

Bioaffinity binding includes that the analyte or the analyte-derived entity is a member of a so-called bioaffinity pair and the ligand is the other member of the pair. Typical bioaffinity pairs are antigen/hapten and an antibody/antigen binding fragment of the antibody; biotin and strepavidin; complementary nucleic acids; immunoglobulin-binding protein and immunoglobulin (for instance IgG or an Fc-part thereof and protein A or G), lectin and the corresponding carbohydrate, etc. The term "bioaffinity pair" includes affinity pairs in which one or both of the members are synthetic, for instance mimicking a native member of a bioaffinity pair.

If MC2 and MC3 does not coincide and M2 retains a molecular entity that is to be measured in MC3, then this entity has to be released from M2 and transported downstream to MC3 before step (v) can be performed. This transport is typically accomplished by passing a liquid having the proper desorption characteristics for the bound entity through MC2. The transport may be directly to MC3 but may under certain circumstances require intermediate steps/microcavities in which additional processing is taking place. Washing steps may be inserted between the retaining/adsorption step and the desorption step. Washing liquids, desorption liquids etc are typically common for several microchannel structures and are therefore preferably introduced via a part of an inlet arrangement that is common for several microchannel structures.

The capturing of excess substrate, products or contaminants in MC2 may take place under non-flow or flow conditions.

A retaining microcavity (MC2) typically has a volume in the nl-range, for instance ≤ 500 nl, such as ≤ 100 nl or ≤ 50 nl or ≤ 25 nl. These figures also apply if the retaining microcavity (MC2) coincides with a detection microcavity (MC3).

The capturing and release of excess substrate and/or product typically means concentrating. The increase in concentration is with a factor > 10°, for instance in the interval 10¹-10⁶, such as 10¹-10⁴.

The detection microcavity MC3 provides the interface to the external instrument that enables the measurement in step (v), i.e. detection and/or measurement of the disappearance of a substrate and/or the appearance of a product as the result of the catalytic reaction that takes place within the catalytic microcavity MC1. Depending on the kind of substrate/product that is utilized/formed in MC1, techniques based on a change in conductivity, temperature, viscosity etc may be used. Spectrometric can also be used. The two most potent spectrometric principles are spectrometry that is not based on photons, e.g. mass spectrometry, and spectrophotometry.

Spectrophotometry includes measurement of properties related to IR, UV etc. The choice depends on what is appropriate in each particular case. The principle may, for instance, be based on fluorescence if the substrate and/or the product are fluorescent or fluorogenic, on luminescence if the substrate and/or product are luminescent or luminogenic etc. Luminescence includes bioluminescence as well as chemiluminescence. Confocal techniques may be utilized, in particular if the microfluidic device is made of plastics. For spectrophotometric methods the interfacing is typically via a window in the walls of the detection microcavity MC3. The window is translucent for the spectrophotometric principle utilized.

Mass spectrometric principles includes energy desorption ionization (EDI) from a surface, electrospray ionisation (ESI) via a tip of a microchannel etc, and typically means that the interface comprises an opening on the detection microcavity.

Typical EDI principles are thermal desorption/ionisation (TDI), plasma desorption/ionisation (PDI) and various kinds of irradiation desorption/ionisation (IDI) such as fast atom bombardment (FAB), electron impact etc. In the case a laser is used the principle is called laser desorption/ionisation (LDI). Desorption may be assisted by presenting the MS analyte together with various helper substances or functional groups on the surface. Common names are matrix assisted laser desorption/ionisation (MALDI) including surface-enhanced laser desorption/ionisation (SELDI).

Electrosprays suitable for electrospray ionization mass spectrometry (ESI MS), for instance adapted to the nanospray format, are mostly formed in capillaries made of glass or fused silica, or polymer material like silicon. Suitable tubing is typically of cylindrical geometry with tip internal diameters in the 5-20 µm range. The word nanospray means that the liquid transferred out of the tubing is in the nanoliter per minute range. Suitable rates for transfer of liquid to the mass spectrometer can be found in the interval of 1-1000 nl/min, e.g. in the interval 10-500 nl/min. By infusion (no external force), only a few nanoliters per minute (5-25 nl/min) are transported out of the tubing while with applied external pressure 50-500 nl/min is more common.

A liquid solution suitable for ESI MS analysis comprises an organic solvent:water mixture including a lower concentration of acid or base. The composition of the solvent is important especially with regard to surface tension and conductivity. A low surface tension and conductivity is desirable as to obtain an efficient desolvation and ionization process as well as a stable spray. If the sample is dissolved in water only, a so-called make-up solvent is added (external delivery). A make-up solvent is typically configured co-axially (sheat-flow) around a nanospray tip. A make-up gas (typically N₂) is sometimes added (e.g., co-axially) to support the desolvation process.

Interfaces between microfluidic devices and mass spectrometer are described in WO 02075775 (Gyros AB) and WO 02075776 (Gyros AB) and publications cited therein.

### Mixing functions, separation functions etc.

A microchannel structure may also comprise separate or combined functional unit that enables:
(1) separation of particulate matter and contaminants from a liquid aliquot introduced via an inlet port,
(2) separation of soluble components according to principles other than binding to a soluble solid phase via affinity or reversible covalent attachment as described for the retaining microcavity MC2,
(3) mixing, e.g. for the formation of an affinity complex upstream the reaction microcavity, and
(4) additional catalytic reactions, e.g. for processing the original sample upstream MC1 or for further processing the substrate and/or the product downstream MC1.

These additional functions may comprise separate microcavities and may be present upstream or downstream the catalytic microcavity MC1.

A unit for separation of particulate matter is typically positioned upstream a volume defining unit or the two units are combined to a common unit.

A unit for separation of soluble component as defined in item 2 above may be a retaining microcavity containing a size exclusion separation medium.

A mixing unit typically has one inlet port for each liquid to be mixed and may be part of the inlet arrangement discussed above. Mixing units may be based on
a) mechanical mixers (e.g. WO 9721090, Gamera),
b) creation of turbulent flow in a microcavity by two incoming liquid flows (e.g. WO 9853311, Gamera),
c) creation of a laminar flow in the inlet end of a microconduit and mixing by diffusion during the transport in the microconduit (e.g. US 5,637,469, Wilding & Kricka), by a difference in flow rate between the center of a microchannel and at the walls (WO 02074438, Gyros AB) etc.

Separation units and mixing units that are advantageous in centrifugally based systems are given in WO 02074438 (Gyros AB). Other variants are described in publications cited in WO 02074438 (Gyros AB).

### Additional units may also be present.

The presence of units 1-4 means that the protocol of the inventive method may include at least one additional step selected from
- a step for separation of particulate material from a liquid,
- a step for separation of soluble material which is based on principles other than covalent binding or affinity adsorption,
- a mixing step that may include premixing of liquid aliquots which contain different components, diluting etc, and
- a incubation step for performing additional catalytic reactions .

The separation step, if present, may be carried out simultaneously with a volume-metering step if the microchannel structures can utilize a combined separation/volume metering unit. Otherwise the separation step is typically upstream a volume-metering step, in particular if the separation step is used to clean a sample that is to be further processed within a micochannel structure.

A mixing step, if present, is typically downstream a volume metering step and precedes a catalytic reaction step, for instance in catalytic microcavity MC1.

### Valve functions.

Two categories of valves are:
1. Mechanical valves which are based on movable mechanical parts in a microchannel at the position of the valve function,
2. Inner valves as defined below.

Mechanical valves typically comprise physically closing and opening of a microconduit by a mechanical part (active valves).

For inner valves non-passage or passage of a liquid may be based on:
(a) A change in the cross-sectional area in a microconduit at the valve position by changing the energy input to the material (active valves). See WO 0102737 (Gyros AB) that utilizes a stimulus-responsive polymer, and WO 9721090 (Gamera) that suggests relaxation of non-equilibrium polymeric structures and meltable wax plugs.
(b) A local increase in the interaction energy between a through-flowing liquid aliquot and an inner surface of a microconduit at the valve position (capillary or passive valves). The microchannel at the valve is open even if the liquid is unable to pass through (halted). Through flow is accomplished simply by increasing the force driving the liquid. See WO 9958245 (Gyros AB) and WO 0185602 (Gyros AB) that describe that a local increase in surface wettability in a channel will act as a valve, and WO 9615576, (David Sarnoff Res Inst), EP 305210 (Biotrack), WO 9807019 (Gamera) etc that describe passive valves that are based on an abrupt increase of a lateral dimension of a microchannel.

In the present invention, in particular for centrifugally based systems inner valves are preferred, with particular emphasis of capillary valves based on a lateral change in a cross-sectional dimension and/or a local change in surface wettability. For aqueous liquids this kind of capillary valves means hydrophilic surfaces combined with an increase in cross-sectional dimension or hydrophobic surface breaks.

### Means for controlling undesired liquid transport.

Imbibing means that liquid transport is initiated in the edges defined as the intersection between two inner walls of a microchannel. Imbibing renders it difficult to retain a defined minute volume of a liquid in a desired microcavity for a longer period of time if there is a microchannel having a length-going edge directly connected to the microcavity. If the microchannel is connected to ambient atmosphere, for instance via an inlet port, imbibing will promote evaporation and irreversible loss of a predispensed liquid volume. The creeping of liquid in edges from one microcavity is called wicking. Surface modifications (geometrical as well as chemical) that counteract wicking are called anti-wicking means. Anti-wicking means in the form of hydrophobic surface break between two length-going edges have been described previously (WO 9958245, Gyros AB). WO 02074438 (Gyros AB) presents improved anti-wicking means that utilize a combination of changes in geometric as well as chemical surface characteristics in length-going edges of microchannels. The changes are typically local. For aqueous liquids the surfaces of the micro channels are essentially hydrophilic and the change in geometric surface characteristics in the form of indentations and the change in chemical surface characteristics to hydrophobic or non-wettability. Both kinds of changes are to be located primarily to edges. Passive valves in form of changes in chemical surface characteristics will also act as anti-wicking means.

### Figures 1a and b

These figures illustrate a preferred arrangement which a circular device which utilizes centrifugal force for liquid transport, i.e. spinning. The liquid is primarily aqueous. Each of the microchannel structure has an outlet port that can be used solely as detection microcavity (MC3) or as a combined retaining/detection microcavity (MC2/MC3) or a combined catalytic/retaining/detection microcavity (MC1/MC2/MC3). The outlet port (MS-port) can be interfaced with a MALDI mass spectrometer. See WO 02075775 (Gyros AB) and also the experimental part below.

**Figure 1a** illustrates a microfluidic device (CD) (1000) comprising 10 sets/subgroups (1001) of identical microchannel structures (1002) arranged annularly around the spin axis (axis of symmetry) (1003) of a circular disc (1000). Each set comprises 10 microchannel structures, i.e. in total 100 microchannel structures per device. Each microchannel structure is oriented radially with an inlet port (1004,1005) located at shorter radial distance than an outlet port that equals a detection microcavity (MC3 = MS-port) (1006). These outlet ports are ∼0.9 cm from the edge (1036) of the disc. The disc was of the same size as a conventional CD and has a home mark (1035) at the edge (1036) for positioning the disc when dispensing liquids and aligning detector heads with detection microcavities. See WO 03025548 (Gyros AB).

The device comprises a bottom part in plastic material that contains the uncovered form of the microchannel structures given in figure 1a and is typically produced by some kind of replication process. The microchannel structures are covered with a 1id in which there are holes (1007,1008,1009,1010,1011,1012 in figure 1b) that typically are circular and will function as inlets (1007,1008), outlets (1009,1010) or as separate calibrator areas (1011,1012). The surface with the uncovered form of the microchannel structures has typically been hydrophilised e.g. by oxygen plasma in accordance WO 0056808 (Gyros AB). The lid has typically been thermo laminated to the bottom part in accordance with WO 0154810 (Gyros AB).

**Figure 1b** shows in enlarged form a set (1001) of 10 microchannel structures (1002). Each microchannel structure has a first inlet port (1005) that is only connected to one microchannel structure, and a second inlet port (1004), which is common for several microchannel structures. At the bottom of each of these two inlet ports (1004,1005) there are ridges/grooves (1013) directed inwards the microchannel structure. The first inlet port (1005) may be directly connected to a catalytic microcavity (MC1)(1016), possibly via a volume-defining unit. The other inlet port (1004) may be common for all microchannel structures in a set and is typically connected to the catalytic microcavity MC1 (1016) via a common distribution manifold (1017) that has one volume defining unit (1018) per microchannel structure. The distribution manifold (1017) may have one waste outlet port (1009) at at least one, preferably at both, of its flanks. The lower part of the reaction microcavity has an outlet microconduit (1020) which leads to the outlet port (1006) which in this case corresponds to the detection microcavity MC3. The outer part (1019) of the outlet microconduit (1020) may comprise a solid phase (1019), for instance of packed bed of chromatography particles (RPC, reversed phase chromatography) held against a dual depth (1021) (from 100 µm to 10 µm to 20 µm in the flow direction). The solid phase or mini-column (1019) may work as the active part of the catalytic microcavity or as a retaining microcavity. See the experimental part. The microconduit (1020) will end in the bottom (1022) of the outlet port (= MS port) (1006) as a widening groove (drop-like seen from above)(1023), which will function as a crystallization area and also as a retaining microcavity. The catalytic microcavity (MC1) (1016) may be Y-shaped with two inwardly/upwardly directed shanks (1014,1015) that are in communication with the two inlet ports (1005 and 1004, respectively) and one outwardly/downwardly directed shank that equals the outlet microconduit (1020).

Each volume-defining unit (1018) of the distribution manifold is surrounded by anti-wicking means (1024,1025) that will prevent wicking of liquid between the volume-defining units (1018) and support proper break up of the liquid when emptying downwards into the catalytic microcavities MC1 (1016). The anti-wicking means typically comprises (a) a geometric change (1024) in edges going between the volume defining units (1018) or from a volume defining unit (1018) to a waste outlet port (1009) and/or a hydrophobic surface break (1025, rectangle).

Valve functions in the form of local hydrophobic surface breaks (rectangles, 1026, 1027) are present in the waste channels (1028) of the distribution manifold (1017) before the outlet openings (1009) at the flanks, and in each microconduit (1029) between a volume defining unit (1018) and the inlet into the reaction microcavity MC1 (1016). The valve function (hydrophobic surface break) (1027) may be positioned before, across or immediately after the joint between the microconduit (1029) and the catalytic microcavity MC1 (1016).

Local hydrophobic surface breaks (1030,1031, rectangles) for directing liquid into the structure are present at the inlet openings (1007,1008).

Furthermore, a U- (horse-shoe) shaped local hydrophobic surface break (1032) is positioned at the outlet opening (1010 of each outlet port (1006, MS-port) for preventing liquid exiting the port from spreading onto the top of the disc.

The hydrophobic surface breaks (1026,1027,1030,1031) were applied before an upper substrate (lid) was laminated to the surface of the bottom substrate comprising the microchannel structures in open form. The hydrophobic surface break (1032) was applied after lamination and gold sputtering.

The openings (10011,1012) in the lid are calibration areas for calibration substance. The surface within the circles is the top of the bottom part. One (1012) of them comprises a depression (1033) that mimics the widening groove (1022) of an MS-port (1006)

Before application of the local hydrophobic surface area (1032) around the opening (1010) the top of the lid was sputtered with gold at least as a continuous layer in-, around-, and between the openings including the calibrator areas (1010). A continuous gold film thus is connecting the bottom and the walls of the outlet ports (= MS-ports) (1006) and the calibrator areas. Other parts of the lid (but not the whole lid), besides the areas in and around the MS-ports and calibrators, were also covered with gold. The aim has been to cover as much lid area as possible with gold as long as the gold layer do not interfere with microfluidic- and instrumental functions, e.g. the gold is not allowed to cover the rim of the lid (CD) as it upsets the home-positioning of the CD or the inlets (1007,1008) of the microfluidic structures since it affects the capillary force by an increased hydrophobicity (liquid would then be more difficult to fill up the channels).

The depth in the microchannel structures is the same (100 µm) and constant from the inlet openings (1007,1008) to the dual depths (1021).

Filling of the distribution manifold (1017) including the volume defining units (1018) through the common inlet port (1004) is solely by capillary force.

A separate aspect is a method for immobilization a proteinic component of a biocatalytic system to a plastic substrate surface. This aspect has the characteristic feature in comprising the steps of: (i) treating the surface with a gas plasma of a non-polymerisable gas in order to introduce electrical charges on the surface which are opposite to electrical charges that are present on the component; and (ii) contacting the surface created in step (i) with the proteinic component at a pH where the component and the surface has opposite charges. The surface may be the abovementioned surface comprising uncovered microchannel structures. Between steps (i) and (ii) the surface is covered by a lid comprising holes. Subsequently a liquid containing the appropriate bio-component and the appropriate pH-buffer is incubated in the microchannels. Finally the liquid is removed and the channels may subsequently be rinsed with aqueous liquid.

### EXPERIMENTAL PART

### METHODS AND INSTRUMENTS

### Instrument for handling the microfluidic device

The instrument for performing the experiment was a CD microlaboratory (Gyrolab Workstation, Gyros AB, Uppsala, Sweden). This instrument is a fully automated robotic system controlled by application-specific software. Microplates containing samples or reagents are stored in a carousel within the system. A high precision robot transfers samples from microplates or containers into the microworld of the CD. CDs are moved to the spinning station for the addition of samples and reagents. An application-specific method within the software controls the spinning at precisely controlled speeds controls the movement of liquids through the microstructures as the application proceeds. The CDs are transferred to a MALDI mass spectrometer for analysis and identification.

In the instrument sample and reagents are transferred from micro plates (containing typical volumes of 5 to 100 µl) to a microfluidic disc in CD-format by a robotic arm. The robotic arm holds 10 capillaries where sample and reagents are contained inside during transfer. The volume of sample/reagents aspirated into the capillaries and later dispensed onto the CD is driven by syringe pumps and controlled by software (as are the robotic arm). Aspiration and dispension rates are typical in the 0.5-10 µl/sec rate. Once the liquid is dispensed onto the disc, at respective inlet port, it is drawn, by capillary force, into respective common/micro structure.

### Microfluidic device

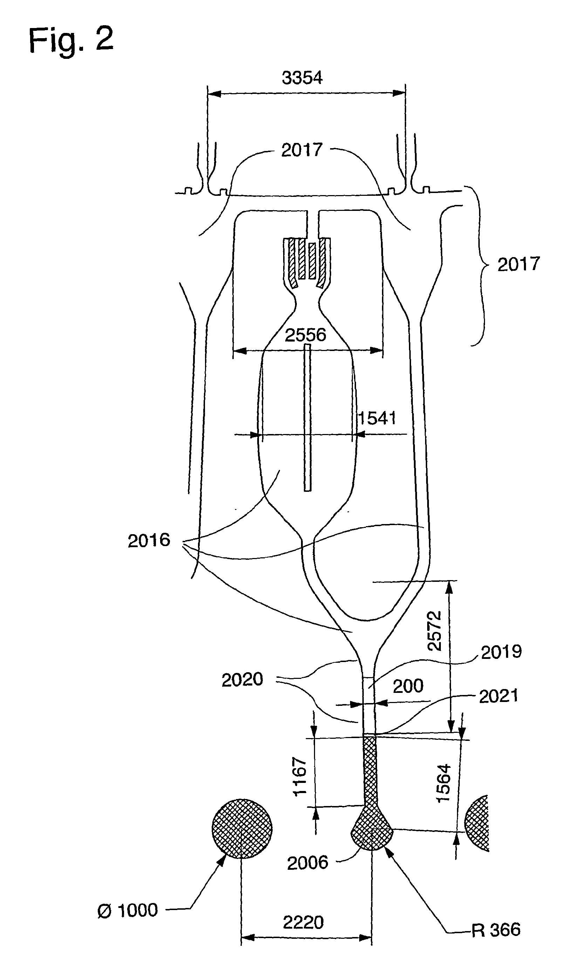

The general layout was essentially the same as the disc in figures 1 except that the individual microchannel structures were as outlined in figure 2. The disc was constructed from a bottom substrate in which the uncovered structures had been replicated by moulding a plastic material (Zeonor^{™}). Prior to thermolaminating a lid according to WO 0154810 (Gyros AB) for covering the structures, the surface containing the microstructures had been O₂-plasma (WO 0056808, Gyros AB).

### Trypsin immobilization in catalytic micro cavities (MC1) (2016)

Trypsin (Sigma, St. Louis, MO, not TPCK treated) was immobilized onto the inner walls of the microchannel structures. A solution of trypsin (7 mg/ml) in ammonium bicarbonate buffer (50 mM, pH 7,8) was injected into the non-common inlet (2005) of the microchannel structures and allowed to pass into the catalytic microcavities (500 nl) (MC1)(2016). Trypsin was allowed to adsorb to the surface of the volume (2016) filled up with the solution for 30 minutes at room temperature. Subsequently the trypsin solution was removed by applying vacuum to the inlet port (2005), and the structures were rinsed with three volumes of ammonium bicarbonate buffer. As a reference, naked O₂ -plasma treated microstructures were studied.

### Digestion of casein Bodipy TR-X in trypsin coated CD-microstructures

A stock solution of casein Bodipy^{™} TR-X (1 mg/ml) (Molecular Probes, Portland, OR) was dissolved in sodium bicarbonate buffer pH 8,3. The substrate was diluted to 10 and 100 µg/ml in ammonium bicarbonate buffer, (50 mM, pH 7,8) and injected to the trypsin coated and the naked O₂-plasma treated microchannel structures (2016).

### Detection of immobilized trypsin activity by fluorescence microscopy

Tryptic digestion of casein Bodipy TR-X in the microcavities (2016) was detected by means of a fluorescence microscope (Nikon Eclipse TE300) equipped with a Texas Red filter (Ex: 530-585 nm; Em: 605-680 nm). The microscope was equipped with a mercury lamp, excitation and emission filter, a magnifying lens and a CCD camera for detection. Emitted light was measured from the same side of the disc as the incoming exciting light (epifluorescence). Emitted light was thus measured from the bottom of the disc. The shutter speed was set to 2 seconds for all exposures. For image analysis the software Meta Morph was used.

### Reduction and alkylation of bovine serum albumin

Bovine serum albumin (BSA) (Sigma St. Louis, 99%; MO; A-0281) (10 nmol) was dissolved in ammonium bicarbonate buffer (980 µl, 50 mM). Dithiothreitol (10 µl, 45 mM) was added and the solution was incubated for 15 minutes at 50°C. Iodoacetamide (10 µl, 100 mM) was added and the mixture was incubated for 15 minutes at room temperature. The resulting solution containing reduced and alkylated BSA was subsequently diluted to the appropriate concentration for digestion experiments performed in a microchannel structure of figure 2.

### Packing of nanocolumns and MALDI-MS analysis

Nanocolumns (2019) of Source 15-RPC particles were packed in the microchannel structures against the dual depth (2021). The particles were suspended in 30-40 % EtOH and loaded via a common inlet port and distributed via the manifold (2017) to a lower part (2019) against the dual depth (2021) in the lower part of outlet microconduit (2020). The columns were packed by means of a bench top centrifuge. The loading channel and the packed columns were rinsed with a 30-40% EtOH solution. The columns were washed through the common channel and equilibrated with 50 % (v/v) acetonitrile and 0,1% (v/v) trifluoro acetic acid (TFA). The detailed sample loading procedure and spin sequence used is given in appendix 1. Peptide masses were determined by means of a Bruker MALDI-TOF biflex instrument. Samples were analysed directly on the microfluidic device introduced into the MALDI ion source.

### RESULTS AND DISCUSSION

### Microfluidic structure design and trypsin immobilization

The microfluidic structure used to perform tryptic digestions is shown in figure 2. Oxygen plasma treatment of the surface before application of the lid allows for capillary force to be used for fast and efficient sample introduction into a microstructure. However, this treatment creates a surface that carries a net negative charge at neutral and basic conditions. This property renders the surface to be prone to non-specific protein adsorption, which in most applications must be suppressed. We hypothesised that the charged nature of the plasma treated surface may instead be exploited to attach charged components such as trypsin molecules that carry a net positive charge at neutral and basic conditions. Trypsin coating of a plasma-treated microstructure should thus allow for a convenient one-step procedure for the introduction of a catalytically active surface in the CD and simultaneously saturate the protein binding capacity of the surface, leading to a reduced risk of sample loss due to non-specific adsorption to the surface.

Passive adsorption of proteins to surfaces, typically generate a protein density of 1-5 mg/m². A protein density of 2,5 mg/m² corresponds to approximately 100 fmaol/mm² for trypsin (M_{w}=23800 g/mol). The total surface area of the individual sample inlet structures including the lid is 9 mm² (base area=4,1 mm²; mantle area=0,9 mm². Thus, complete surface coverage of the inlet structure of CDM1:J (500 nl) corresponds to approximately 1 pmol (2 µM). To reach this level of surface coverage, a trypsin solution of 7 mg/ml (M_{w}=23800 g/mol) was used for coating. The microstructure used to immobilize trypsin is shown in figure 2.

### Detection of trypsin activity by fluorescence microscopy

To determine if we had successfully immobilized trypsin with maintained catalytic function in the microchannel structures, we used a casein substrate labelled with a fluorophore. Casein Bodipy TR-X is labelled with the red fluorescent BODIPY TR-X dye, resulting in almost total quenching of the conjugate's fluorescence. Trypsin-catalyzed hydrolysis relieves this quenching, yielding bright red fluorescent peptides. Tryptic digestion of casein Bodipy TR-X in the microchannel structures was detected by means of a fluorescence microscope. A trypsin coated structure showed significant enzyme activity compared to a oxygen plasma treated reference structure. Digestion experiments were performed at different substrate concentration (table 1). At lower substrate concentration (10 µg/ml) a weak but significant signal was detected above background. The signal recorded in the trypsin-coated microstructure was only slightly lower compared to a structure were digestion was performed in solution with excess (3.5 mg/ml) trypsin in solution.

In the reference microchannel structures in which the inner walls had only been O₂-plasma treated essentially no fluorescence could be detected.

### Integrated digestion, peptide concentration, purification and crystallization on a microfluidic disc.

Two alternative technical solutions to perform integrated protein digestion in a microfluidic device were investigated.

First, a protein digestion compartment was created by immobilizing trypsin to all parts of the inner walls of 500 nl catalytic microcavity (MC1) (2016). To test the performance of the protein digestion compartment we reduced and iodoacetamide alkylated bovine serum albumin (BSA) as a model substrate. Samples of 500 nl volume containing 5-50 pmol BSA were introduced into the digestion compartment (catalytic microcavity, MC1) (2016) of the microfluidic device and incubated for 30 minutes at room temperature. After digestion, the product peptides were concentrated and purified in a retaining microcavity (MC2) containing a packed bed of RPC-particles (2019), and after elution crystallized in a detection microcavity (MC3) (2006) designed as a combined outlet and MALDI MS-port. All steps were integrated on the device. Subsequent MALDI-MS analysis allowed for the detection of 5 peptide products originating from BSA (table 2). The mass error in the analysis was less than 100 ppm.

By including acetonitrile in the reaction medium used for digestion it was possible to significantly increase the number of different peptides while simultaneously reducing the substrate concentration and performing the reactions at room temperature.

We also explored the possibility to digest a BSA sample that had been trapped in a reaction microcavity (MC1) comprising 30 nl packed bed (2019) of RPC-particles packed against the dual depth (2021). To avoid potential sample loss in the inlet structures the inner walls were trypsin coated prior to sample introduction. The BSA samples were spun down through the packed bed where BSA adsorbed. A solution of trypsin (0.07 mg/ml) was allowed to saturate the column and digestion was allowed to proceed under non-flow conditions at room temperature for 30 minutes. Subsequently the product peptides were eluted and crystallized on the MALDI target of the MS-ports (2006). With this approach 5 pmol of BSA sample in 500 nl allowed for the detection of 15 peptides originating from BSA. The recorded mass error was less than 100 ppm. Digestion of 50 pmol BSA allowed for the detection of 8 peptide products by MALDI MS analysis (table 2). The reduced number of peptides identified in the 50 pmol sample compared to the 5 pmol sample may be due to the use of a non-optimal matrix to sample ratio at the higher sample load. We have thus demonstrated two technical solutions for the successful protein digestions that may easily be implemented in a microfluidic device of the kind illustrated in figures 1 and 2.

A third approach has also been investigated successfully in which a commercially available immobilized trypsin in particle form (Poroszyme, Perseptive, USA) has been packed as a bed on top of a bed of RPC-particles held against the dual depth of the microchannel structures of figures 1 and 2. This approach may offer fast digestion rates during flow through conditions.

Further details about eluting of peptides from RPC beds are given in WO 02075775 (Gyros AB).

**TABLE 1. Protein digestion performed in trypsin coated catalytic microcavities (2016). Extent of casein Bodipy TR-X digestion at different reaction conditions and microstructure surface treatment. Trypsin activity was measured with a fluorescence microscope equipped with a Texas Red filter (Ex:530-585 nm; Em: 605-680 nm).**

| **Surface treatment** | **Reaction time** **(min)** | **Substrate concentration** **(µg/ml)** | **Fluorescence** |
|---|---|---|---|
| O₂ plasma | 40 | 100 | 903,37 |
| trypsin coated | 40 | 100 | 3153,78 |
| O₂ plasma | 60 | 10 | 393,293 |
| trypsin coated | 60 | 10 | 437,43 |
| trypsin coated | 40 | 10 | 441,353 |
| O₂ plasma | 40 | 10 | 407,59 |
| O₂ plasma | 10 | 10 | 406,106 |
| trypsin coated | 10 | 10 | 436,157 |

**TABLE 2. Integrated protein digestion, sample preparation and crystallization in a CD-microlaboratory. Theoretically and experimentally determined peptide masses resulting from tryptic cleavage of bovine serum albumin (BSA). Two strategies were explored for protein digestion in the CD. Trypsin was immobilized to the walls of the type of microchannel structure given in figure 2. Alternatively, the BSA sample was immobilized in a RPC column keeping trypsin in solution. Digestions were performed at room temperature for 30 minutes. BSA samples (5-50 pmol) were processed in the microfluidic device. Peptide masses were determined by means of a Bruker MALDI-TOF biflex instrument. Samples were analysed directly on the device introduced into the MALDI ion source.**

| **Theor. pept. mass** **(Da)** | **Immob trypsin** **(5 pmol BSA)** | **No trypsin** **(5 pmol BSA)** | **Immob. BSA** **5 pmol** | **Immob. BSA** **50 pmol BSA** | **Peptide sequence** |
|---|---|---|---|---|---|
| 1138,567 | | | 1138,585 | | CASIQKFGER |
| 1163,631 | | | 1163,67 | | LVNELTEFAK |
| 1193,602 | | | 1193,679 | | DTHKSEIAHR |
| 1249,621 | | | 1249,658 | | FKDLGEEHFK |
| 1283,711 | 1283,556 | | 1283,781 | 1283,516 | HPEYAVSVLLR |
| 1305,716 | | | 1305,759 | | HLVDEPQNLIK |
| 1419,694 | | | 1419,726 | 1419,518 | SLHTLFGDELCK |
| 1439,812 | 1439,637 | | 1439,857 | 1439,619 | RHPEYAVSVLLR |
| 1479,795 | 1479,655 | 1479,833 | 1479,848 | 1479,608 | LGEYGFQNALIVR |
| 1567,743 | | | 1567,809 | 1567,563 | DAFLGSFLYEYSR |
| 1639,938 | 1639,803 | 1639,964 | 1639,959 | 1639,74 | KVPQVSTPTLVEVSR |
| 1724,835 | | | 1724,871 | 1724,638 | MPCTEDYLSLILNR |
| 1750,974 | | | 1750,97 | | |
| 1880,921 | | | 1880,962 | 1880,744 | RPCFSALTPDETYVPK |
| 1907,921 | | | 1908,011 | | LFTFHADICTLPDTEK |
| 1946,016 | | 1946,187 | | | SLHTLFGDELCKVASLR QNCDQFEKLGEYGFQN |
| 2529,219 | | 2529,628 | | | ALIV R MPCTEDYLSLILNRLCV |
| 2604,298 | 2604,7 | | | | LHE K |

### SPIN SEQUENCES FOR SAMPLE PREPARATION IN A CENTRIFUGALLY BASED MICROFLUIDIC DEVICE COMPRISING THE MICROCHANNEL STRUCTURE OF FIGURE 2.

### 1. COLUMN RECONDITIONING

| **50% acetonitrile** | **500 nl/micro structure** | **Applied through common channel** |
|---|---|---|
| **Type** | **Speed (rpm)** | **Time (s)** |
| Ramp | 2000 | 2 |
| Constant speed | 2000 | 10 |
| Ramp | 4000 | 2 |
| Constant speed | 4000 | 10 |
| Ramp | 7000 | 2 |
| Constant speed | 7000 | 5 |
| Ramp | 0 | 2 |

### 2. COLUMN WASH PERFORMED TWICE

| **0,1% TFA** | **500 nl/micro structure** | **Applied through common channel** |
|---|---|---|
| **Type** | **Speed (rpm)** | **Time (s)** |
| Ramp | 2000 | 2 |
| Ramp | 3500 | 10 |
| Ramp | 4000 | 10 |
| Ramp | 7000 | 2 |
| Constant speed | 7000 | 5 |
| Ramp | 0 | 2 |

### 3. SAMPLE TRANSFER

| **Sample in 50 mM ammonium bicarbonate buffer** | **500 nl** | **Individual inlets** |
|---|---|---|
| **Type** | **Speed (rpm)** | **Time (s)** |
| Ramp | 50 | 5 |
| Ramp | 1000 | 2 |
| Ramp | 2500 | 0,2 |
| Constant speed | 2500 | 0,1 |
| Ramp | 1000 | 0,2 |
| Constant speed | 1000 | 30 |
| Ramp | 3000 | 0,3 |
| Constant epeed | 3000 | 0,2 |
| Ramp | 2000 | 0,2 |
| Constant speed | 2000 | 30 |
| Ramp | 7000 | 2 |
| Constant speed | 7000 | 5 |
| Ramp | 0 | 2 |

### 4. DESALTING, PERFORMED TWICE

| **0,1% TFA** | **500 nl/micro structure** | **Individual inlets** |
|---|---|---|
| **Type** | **Speed (rpm)** | **Time (s)** |
| Ramp | 50 | 5 |
| Ramp | 2000 | 2 |
| Ramp | 3000 | 30 |
| Ramp | 7000 | 2 |
| Constant speed | 7000 | 5 |
| Ramp | 0 | 2 |

### 5. PEPTIDE ELUTION

| | 50% ACN / 0,1% TFA | | |
|---|---|---|---|
| | 2 mg/ml α-cyano cinnimic acid | 500 nl/microchannel structure | Common channel |
| | | | |
| | Type | Speed (rpm) | Time (s) |
| Intro | Ramp | 50 | 3 |
| | Ramp | 1500 | 0,15 |
| | Constant speed | 1500 | 0,5 |
| | Ramp | 700 | 0,25 |
| | Constant speed | 700 | 30 |
| Repeat 1 #1 | Ramp | 1000 | 0,1 |
| | Constant speed | 1000 | 0,6999 |
| | Ramp | 800 | 0,1 |
| | Constant speed | 800 | 30 |
| R1 #2 | Ramp | 1000 | 0,1 |
| | Constant speed | 1000 | 0,6999 |
| | Ramp | 800 | 0,1 |
| | Constant speed | 800 | 30 |
| Repeat2 # 1 | Ramp | 1100 | 0,1 |
| | Constant speed | 1100 | 0,6999 |
| | Ramp | 800 | 0,1 |
| | Constant speed | 800 | 30 |
| R2 # 2 | Ramp | 1100 | 0,1 |
| | Constant speed | 1100 | 0,6999 |
| | Ramp | 800 | 0,1 |
| | Constant speed | 800 | 30 |
| R2 # 3 | Ramp | 1100 | 0,1 |
| | Constant speed | 1100 | 0,6999 |
| | Ramp | 800 | 0,1 |
| | Constant speed | 800 | 30 |
| R2 # 4 | Ramp | 1100 | 0,1 |
| | Constant speed | 1100 | 0,6999 |
| | Ramp | 800 | 0,1 |
| | Constant speed | 800 | 30 |
| R2 # 5 | Ramp | 1100 | 0,1 |
| | Constant speed | 1100 | 0,6999 |
| | Ramp | 800 | 0,1 |
| | Constant speed | 800 | 30 |
| R2 # 6 | Ramp | 1100 | 0,1 |
| | Constant speed | 1100 | 0,6999 |
| | Ramp | 800 | 0,1 |
| | Constant speed | 800 | 30 |
| R2 # 7 | Ramp | 1100 | 0,1 |
| | Constant speed | 1100 | 0,6999 |
| | Ramp | 800 | 0,1 |
| | Constant speed | 800 | 30 |
| Finish | Ramp | 0 | 3 |

## Claims

1. A method for characterizing an uncharacterized aspect of the components An₁, An₂ ....Aₙ (i.e. analytes) of a plurality of equal or different catalytic systems CS₁, CS₂ .... CSₙ, respectively, **characterized in** comprising the steps of:
i) providing a microfluidic device which comprises a plurality (n) of essentially identical microchannel structures, each of the microchannel structures comprising in the downstream direction
(a) an inlet arrangement IA with at least one inlet port;
(b) a catalytic microcavity MC1, which comprises an immobilized component C^{im} of the catalytic system CS used in the microchannel structure, and
(c) a detection zone DZ;
ii) distributing to MC1 of each of the microchannel structures the remaining components of the CS used in the microchannel structure by
a) dispensing to the inlet arrangement IA of each of the microchannel structures said remaining components; and
b) transporting corresponding components for the microchannel structures in parallel to load the MC1 in each of the microchannel structures;
iii) performing the catalytic reaction in MC1 of each of the microchannel structures;
iv) transporting in parallel the product formed in step (iii) from MC1 to DZ of each of the microchannel structures, wherein DZ and MC1 do not coincide;
v) detecting and characterizing for each of the microchannel structures the result of the catalytic reaction performed in MC1 in DZ; and
vi) characterizing for each of the microchannel structures the uncharacterized aspect of An₁, An₂ ....Anₙ from the results of step (v).

2. The method of claim 1, **characterized in that** the microfluidic device is made in plastic material.

3. The method of any of claims 1-2, **characterized in that** the catalytic system is selected amongst biocatalytic systems for instance amongst a) enzyme systems in which at least one of the components is a protein and/or a synthetic variant mimicking a protein enzyme, and/or b) polynucleotide based catalytic systems.

4. The method of any of claims 1-3, **characterized in that** the catalytic system is an enzyme system.

5. The method of any of claims 1-4, **characterized in that** the catalytic system is an enzyme system selected amongst hydrolases (esterases, carbohydrases, proteases etc), phosphorylases, oxidoreductases (dehydrogenases, oxidases etc), transferases, decarboxylases, hydrases, and isomerases.

6. The method of any of claims 1-5, **characterized in that** the immobilized form is selected from catalysts, substrates, cosubstrates, cocatalysts, cofactors, cocatalyts etc.

7. The method of any of claims 1-6, **characterized in that** the immobilized form comprises a matrix which is a) the inner walls of MC1 , or b) a packed bed of non-porous or porous particles, or c) a porous monolith, e.g. in the form of a membrane or a porous plug.

8. The method of any of claims 1-7, **characterized in that**
a) DZ comprises
I) a retaining microcavity MC2, which comprises an adsorption medium that is capable of adsorbing at least partially excess substrate, the digestion product or contaminants in the excess substrate or the digestion product, and
II) a detection microcacity MC3 downstream to or overlapping and/or coinciding with MC2, and
b) step (iii) comprises parallel adsorption of the digestion product, excess substrate or the contaminants to the adsorbent in MC2.

9. The method of claim 8, **characterized in that** there is an overlap between MC2 and MC1.

10. The method of any of claims 8-9, **characterized in that** there is an overlap between MC3 and MC1.

11. The method of any of claims 8-10, **characterized in that** there is an overlap between MC3 and MC2.

12. The method of any of claims 1-11, **characterized in that** DZ comprises an interface permitting spectrometric analysis of the result of the catalytic reaction taking place in MC1, and that step (v) comprises recording in DZ a spectra reflecting the result of the catalytic reaction.

13. The method of claim 12, **characterized in that** the interface permits mass spectrometric analysis of the result of the catalytic reaction in MC1 , and that step (v) comprises recording a mass spectra of the product in DZ

14. The method of claim 12, **characterized in that** the interface permits spectrophotometric analysis of the result of the catalytic reaction, and that step (v) comprises recording a relevant part of the spectrophotometric spectra reflecting the result of the catalytic reaction, in particular as fluorescence or chemiluminescence.

15. The method of claim 1-12, **characterized in that**
a) one of the components of CS is a substrate that is fluorescent or fluorogenic, or luminescent or luminogenic, and
b) DZ comprises an interface for detecting an increase or a decrease in fluorescence or luminescence in the catalytic product or substrate, and
c) step (v) comprises recording of fluorescence or luminescence from the reaction product and/or the substrate.

16. The method of any of claims 1-15, **characterized in that** microconduits leading to or from a microcavity, in particular at least one of MC1, MC2 and MC3, comprises anti-wicking means.

17. The method of any of claims 1-16, **characterized in that** an aqueous liquid is used for transporting the components within the microchannel structures and that the inner walls are wettable by this liquid.

18. The method of claim 17, **characterized in that** water contact angles of inner surfaces of the microchannel structures are ≤ 50° or ≤ 30° at the temperature of use.

19. The method of any of claims 17-18, **characterized in that** the device has an axis of symmetry and that the liquid transport in at least a part of each microchannel structure is driven by centrifugal force created by spinning the device around its axis of symmetry.

20. The method of any of claims 1-19, **characterized in that** the device is in the form of a disc, and, if present, said axis of symmetry is perpendicular to the plane of the disc.

21. The method of any of claims 1-20, **characterized in that** there is a passive valve in association with the outlet of the catalytic microcavity and/or if a retaining microcavity and/or a detection microcavity is/are present also with the outlet of each of these microcavities.

22. The method of any of claims 1-20, **characterized in that** at least one of MC1, MC2 and MC3 has a volume in the nl-range.

## Patentansprüche

1. Verfahren zum Charakterisieren eines nicht charakterisierten Aspekts der Komponenten An₁, An₂ ... Anₙ (d.h. Analyten) mehrerer jeweiliger gleicher oder unterschiedlicher katalytischer Systeme CS₁, CS₂ ... CSₙ, **dadurch gekennzeichnet, daß** es die folgenden Schritte aufweist:
i) Bereitstellen einer Mikrofluid-Vorrichtung, die mehrere (n) im wesentlichen identische Mikrokanalstrukturen aufweist, wobei jede Mikrokanalstruktur in Richtung stromabwärts aufweist:
(a) eine Einlaßanordnung IA mit mindestens einer Einlaßöffnung;
(b) einen katalytischen Mikrohohlraum MC1, der eine immobilisierte Komponente C^{im} des in der Mikrokanalstruktur verwendeten katalytischen Systems CS aufweist, und
(c) eine Detektionszone DZ;
ii) Zuführen der übrigen Komponenten des in der Mikrokanalstruktur verwendeten CS zu dem jeweiligen MC1 der Mikrokanalstrukturen durch
a) Zugeben der übrigen Komponenten zu der Einlaßanordnung IA jeder Mikrokanalstruktur; und
b) paralleles Transportieren entsprechender Komponenten für die Mikrokanalstrukturen, um den MC1 in jeder Mikrokanalstruktur zu laden;
iii) Durchführen der katalytischen Reaktion in dem MC1 jeder Mikrokanalstruktur;
iv) paralleles Transportieren des in dem Schritt (iii) erzeugten Produkts aus dem MC1 zu der DZ jeder Mikrokanalstruktur, wobei sich die DZ und der MC1 nicht decken;
v) für jede Mikrokanalstruktur: Detektieren und Charakterisieren des Ergebnisses der in dem MC1 durchgeführten katalytischen Reaktion in der DZ; und vi) für jede Mikrokanalstruktur: Charakterisieren des nicht charakterisierten Aspekts von An₁, An₂ ... Anₙ aus den Ergebnissen des Schritts (v).

2. Verfahren nach Anspruch 1, **dadurch gekennzeichnet, daß** die Mikrofluid-Vorrichtung aus einem Kunststoffmaterial hergestellt ist.

3. Verfahren nach einem der Ansprüche 1 und 2, **dadurch gekennzeichnet, daß** das katalytische System aus biokatalytischen Systemen ausgewählt ist, zum Beispiel aus a) Enzymsystemen, in welchen mindestens eine der Komponenten ein Protein und/oder eine ein Proteinenzym nachahmende synthetische Variante ist, und/oder b) katalytischen Systemen auf Polynukleotid-Basis.

4. Verfahren nach einem der Ansprüche 1 bis 3, **dadurch gekennzeichnet, daß** das katalytische System ein Enzymsystem ist.

5. Verfahren nach einem der Ansprüche 1 bis 4, **dadurch gekennzeichnet, daß** das katalytische System ein Enzymsystem ist, das ausgewählt ist aus: Hydrolasen (Esterasen, Carbohydrasen, Proteasen usw.), Phosphorylasen, Oxidoreduktasen (Dehydrogenasen, Oxidasen usw.), Transferasen, Decarboxylasen, Hydrasen und Isomerasen.

6. Verfahren nach einem der Ansprüche 1 bis 5, **dadurch gekennzeichnet, daß** die immobilisierte Form ausgewählt ist aus: Katalysatoren, Substraten, Cosubstraten, Cokatalysatoren, Cofaktoren, Cokatalysatoren usw.

7. Verfahren nach einem der Ansprüche 1 bis 6, **dadurch gekennzeichnet, daß** die immobilisierte Form eine Matrix aufweist, die a) die Innenwände des MC1 oder b) ein dicht gepacktes Bett aus nichtporösen oder porösen Partikeln oder c) ein poröser Monolith z.B. in Form einer Membran oder eines porösen Stopfen ist.

8. Verfahren nach einem der Ansprüche 1 bis 7, **dadurch gekennzeichnet, daß**
a) die DZ aufweist:
I) einen Rückhalte-Mikrohohlraum MC2, der ein Adsorptionsmedium aufweist, das in der Lage ist, überschüssiges Substrat, das Digestionsprodukt oder Kontaminationen in dem überschüssigen Substrat oder dem Digestionsprodukt zumindest teilweise zu absorbieren, und
II) einen Detektion-Mikrohohlraum MC3, der stromabwärts zum MC2 angeordnet ist oder sich mit dem MC2 überlappt und/oder deckt, und
b) der Schritt (iii) aufweist: paralleles Adsorbieren des Digestionsprodukts, überschüssigen Substrats oder der Kontaminationen durch das Adsorptionsmedium in dem MC2.

9. Verfahren nach Anspruch 8, **dadurch gekennzeichnet, daß** es eine Überlappung zwischen MC2 und MC1 gibt.

10. Verfahren nach einem der Ansprüche 8 und 9, **dadurch gekennzeichnet, daß** es eine Überlappung zwischen MC3 und MC1 gibt.

11. Verfahren nach einem der Ansprüche 8 bis 10, **dadurch gekennzeichnet, daß** es eine Überlappung zwischen MC3 und MC2 gibt.

12. Verfahren nach einem der Ansprüche 1 bis 11, **dadurch gekennzeichnet, daß** die DZ eine Schnittstelle aufweist, die eine spektrometrische Analyse des Ergebnisses der in dem MC1 stattfindenden katalytischen Reaktion erlaubt, und daß der Schritt (v) aufweist: Aufzeichnen eines Spektrums in der DZ, das das Ergebnis der katalytischen Reaktion widerspiegelt.

13. Verfahren nach Anspruch 12, **dadurch gekennzeichnet, daß** die Schnittstelle eine massenspektrometrische Analyse des Ergebnisses der katalytischen Reaktion in der MC1 erlaubt und daß der Schritt (v) aufweist: Aufzeichnen eines Massenspektrums des Produkts in der DZ.

14. Verfahren nach Anspruch 12, **dadurch gekennzeichnet, daß** die Schnittstelle eine spektrophotometrische Analyse des Ergebnisses der katalytischen Reaktion erlaubt und daß der Schritt (v) aufweist: Aufzeichnen eines relevanten Teils des spektrophotometrischen Spektrums, der das Ergebnis der katalytischen Reaktion widerspiegelt, insbesondere als Fluoreszenz oder Chemilumineszenz.

15. Verfahren nach Anspruch 1 bis 12, **dadurch gekennzeichnet, daß**
a) eine der Komponenten des CS ein Substrat ist, das fluoreszierend ist oder eine Fluoreszenz hervorruft oder lumineszierend ist oder eine Lumineszenz hervorruft, und
b) die DZ eine Schnittstelle aufweist, um eine Zunahme oder eine Abnahme der Fluoreszenz oder Lumineszenz in dem katalytischen Produkt oder dem Substrat zu detektieren, und
c) der Schritt (v) aufweist: Aufzeichnen der Fluoreszenz oder Lumineszenz aus dem Reaktionsprodukt und/oder dem Substrat.

16. Verfahren nach einem der Ansprüche 1 bis 15, **dadurch gekennzeichnet, daß** Mikroleitungen, die zu einem Mikrohohlraum, insbesondere mindestens einem der Mikrohohlräume MC1, MC2 und MC3, hinführen oder von ihm wegführen, Anti-Dochtwirkung-Einrichtungen aufweisen.

17. Verfahren nach einem der Ansprüche 1 bis 16, **dadurch gekennzeichnet, daß** zum Transportieren der Komponenten innerhalb der Mikrokanalstrukturen eine wäßrige Flüssigkeit verwendet wird und daß die Innenwände von dieser Flüssigkeit benetzbar sind.

18. Verfahren nach Anspruch 17, **dadurch gekennzeichnet, daß** bei der Verwendungstemperatur die Wasserkontaktwinkel der inneren Oberflächen der Mikrokanalstrukturen ≤ 50° oder ≤ 30° sind.

19. Verfahren nach einem der Ansprüche 17 und 18, **dadurch gekennzeichnet, daß** die Vorrichtung eine Symmetrieachse hat und daß der Flüssigkeitstransport in zumindest einem Teil jeder Mikrokanalstruktur von einer Zentrifugalkraft, die durch Drehen der Vorrichtung um ihre Symmetrieachse erzeugt wird, angetrieben wird.

20. Verfahren nach einem der Ansprüche 1 bis 19, **dadurch gekennzeichnet, daß** die Vorrichtung in Form einer Scheibe ist und die Symmetrieachse, falls vorhanden, senkrecht zu der Scheibenebene ist.

21. Verfahren nach einem der Ansprüche 1 bis 20, **dadurch gekennzeichnet, daß** es ein passives Ventil in Kombination mit dem Auslaß des katalytischen Mikrohohlraums und/oder, falls ein Rückhalte-Mikrohohlraum und/oder ein Detektion-Mikrohohlraum vorhanden ist/sind, außerdem mit dem jeweiligen Auslaß dieser Mikrohohlräume gibt.

22. Verfahren nach einem der Ansprüche 1 bis 20, **dadurch gekennzeichnet, daß** mindestens einer der Mikrohohlräume MC1, MC2 und MC3 ein Volumen im nl-Bereich hat.

## Revendications

1. Procédé de caractérisation d'un aspect non **caractérisé** des constituants An₁, An₂ .... Anₙ (i.e analytes) d'une pluralité de systèmes catalytiques égaux ou différents CS₁, CS₂ .... CSₙ, respectivement, **caractérisé en ce qu'**il comprend les étapes consistant :
i) à fournir un dispositif microfluidique qui comprend une pluralité (n) de structures à microcanaux essentiellement identiques, chacune des structures à microcanaux comprenant dans la direction en aval
(a) un agencement d'entrée IA avec au moins une couverture d'entrée ;
(b) une microcavité catalytique MC1, qui comprend un constituant immobilisé C^{im} du système catalytique CS utilisé dans la structure à microcanaux, et
(c) une zone de détection DZ ;
ii) à distribuer dans MC1 de chacune des structures à microcanaux les constituants restants du CS utilisés dans la structure des microcanaux
a) en alimentant lesdits constituants restants à l'agencement d'entrée IA des structures à microcanaux ; et
b) en transportant les constituants correspondants pour les structures à microcanaux en parallèle pour charger la MC1 dans chacune des structures à microcanaux ;
iii) à effectuer la réaction catalytique dans MC1 de chacune des structures à microcanaux ;
iv) à transporter en parallèle le produit formé dans l'étape (iii) de MC1 à DZ de chacune des structures à microcanaux, où DZ et MC1 ne coïncident pas ;
v) à détecter et caractériser, pour chacune des structures à microcanaux, le résultat de la réaction catalytique effectuée dans MC1 dans DZ ; et
vi) à caractériser, pour chacune des structures à microcanaux, l'aspect non **caractérisé** de An₁, An₂ .... Anₙ à partir des résultats de l'étape (v).

2. Procédé selon la revendication 1, **caractérisé en ce que** le dispositif microfluidique est fait de matière plastique.

3. Procédé selon l'une quelconque des revendications 1 ou 2, **caractérisé en ce que** le système catalytique est choisi parmi les systèmes biocatalytiques, par exemple parmi a) les systèmes enzymatiques dont au moins l'un des constituants est une protéine et/ou une variante synthétique imitant une enzyme protéique, et/ou b) les systèmes catalytiques à base de polynucléotides.

4. Procédé selon l'une quelconque des revendications 1 à 3, **caractérisé en ce que** le système catalytique est un système enzymatique.

5. Procédé selon l'une quelconque des revendications 1 à 4, **caractérisé en ce que** le système catalytique est un système enzymatique choisi parmi les hydrolases (estérases, carbohydrases, protéases, etc.), les phosphorylases, les oxydoréductases (déshydrogénases, oxydases, etc.), les transférases, les décarboxylases, les hydrases et les isomérases.

6. Procédé selon l'une quelconque des revendications 1 à 5, **caractérisé en ce que** la forme immobilisée est choisie parmi les catalyseurs, les substrats, les cosubstrats, les cocatalyseurs, les cofacteurs, les cocatalyseurs, etc.

7. Procédé selon l'une quelconque des revendications 1 à 6, **caractérisé en ce que** la forme immobilisée comprend une matrice qui est a) les parois internes de MC1, ou b) un lit tassé de particules non poreuses ou poreuses, ou c) un bloc poreux, par exemple sous la forme d'une membrane ou d'un bouchon poreux.

8. Procédé selon l'une quelconque des revendications 1 à 7, **caractérisé en ce que**
a) DZ comprend
I) une microcavité de rétention MC2, qui comprend un milieu d'adsorption qui est apte à adsorber au moins partiellement un excès de substrat, le produit de digestion ou des contaminants dans l'excès de substrat ou le produit de digestion, et
II) une microcavité de détection MC3 en aval ou chevauchant et/ou coïncidant avec MC2, et
b) l'étape (iii) comprend une adsorption parallèle du produit de digestion, de l'excès de substrat ou des contaminants sur l'adsorbant dans MC2.

9. Procédé selon la revendication 8, **caractérisé en ce qu'**il y a un chevauchement entre MC2 et MC1.

10. Procédé selon l'une quelconque des revendications 8 ou 9, **caractérisé en ce qu'**il y a un chevauchement entre MC3 et MC1.

11. Procédé selon l'une quelconque des revendications 8 à 10, **caractérisé en ce qu'**il y a un chevauchement entre MC3 et MC2.

12. Procédé selon l'une quelconque des revendications 1 à 11, **caractérisé en ce que** DZ comprend une interface permettant une analyse spectrométrique du résultat de la réaction catalytique se déroulant dans MC1, et **en ce que** l'étape (v) comprend l'enregistrement dans DZ d'un spectre réfléchissant le résultat de la réaction catalytique.

13. Procédé selon la revendication 12, **caractérisé en ce que** l'interface permet une analyse spectrométrique de masse du résultat de la réaction catalytique dans MC1, et **en ce que** l'étape (v) comprend l'enregistrement d'un spectre de masse du produit dans la DZ.

14. Procédé selon la revendication 12, **caractérisé en ce que** l'interface permet l'analyse spectrophotométrique du résultat de la réaction catalytique et **en ce que** l'étape (v) comprend l'enregistrement d'une partie appropriée du spectre spectrophotométrique reflétant le résultat de la réaction catalytique, en particulier sous la forme d'une fluorescence ou d'une chimioluminescence.

15. Procédé selon les revendications 1 à 12, **caractérisé en ce que**
a) l'un des constituants de CS est un substrat qui est fluorescent ou fluorogène, ou luminescent ou luminogène, et
b) DZ comprend une interface pour détecter une augmentation ou une diminution de fluorescence ou de luminescence dans le produit catalytique ou le substrat, et
c) l'étape (v) comprend l'enregistrement d'une fluorescence ou d'une luminescence à partir du produit de réaction et/ou du substrat.

16. Procédé selon l'une quelconque des revendications 1 à 15, **caractérisé en ce que** les microconduits conduisant à ou partant d'une microcavité, en particulier au moins l'une parmi MC1, MC2 et MC3, comprennent des moyens anticapillaires.

17. Procédé selon l'une quelconque des revendications 1 à 16, **caractérisé en ce qu'**un liquide aqueux est utilisé pour transporter les constituants à l'intérieur des structures à microcanaux et **en ce que** les parois internes sont mouillables par ce liquide.

18. Procédé selon la revendication 17, **caractérisé en ce que** les angles de contact avec l'eau des surfaces internes des structures à microcanaux sont ≤50° ou ≤30° à la température d'utilisation.

19. Procédé selon l'une quelconque des revendications 17 ou 18, **caractérisé en ce que** le dispositif a un axe de symétrie et **en ce que** le transport de liquide dans au moins une partie de chaque structure à microcanaux est actionné par la force centrifuge créée par la rotation du dispositif autour de son axe de symétrie.

20. Procédé selon l'une quelconque des revendications 1 à 19, **caractérisé en ce que** le dispositif est sous la forme d'un disque et, s'il est présent, ledit axe de symétrie est perpendiculaire au plan du disque.

21. Procédé selon l'une quelconque des revendications 1 à 20, **caractérisé en ce qu'**il y a une vanne passive en association avec la sortie de la microcavité catalytique et/ou, si une microcavité de rétention et/ou une microcavité de détection est/sont présente(s), aussi avec la sortie de chacune des microcavités.

22. Procédé selon l'une quelconque des revendications 1 à 20, **caractérisé en ce qu'**au moins l'une parmi MC1, MC2 et MC3 a un volume dans la gamme des n1.
